# EUROPEAN PATENT APPLICATION

(11) **EP 4 672 401 A1**
(43) Date of publication of application: **31.12.2025**
(21) Application number: 24800175.2
(22) Date of filing: 11.04.2024
(51) Int. Cl.: H01M 10/052, H01M 4/131, H01M 10/0562, H01M 4/525, H01M 4/505, H01M 4/62, H01M 10/0568, H01M 4/02

(54) **LITHIUM SECONDARY BATTERY**

(30) Priority: 04.05.2023 KR 20230058563; 04.10.2023 KR 20230131540
(71) Applicant: LG Energy Solution, Ltd., Seoul 07335 (KR)
(72) Inventor: BYUN, Seoungwoo, Daejeon 34122 (KR); HWANG, Sunwook, Daejeon 34122 (KR); JANG, Eunji, Daejeon 34122 (KR); RYU, Jihoon, Daejeon 34122 (KR); LIM, Taeseob, Daejeon 34122 (KR); KIM, Dong Kyu, Daejeon 34122 (KR); JUN, Youngjin, Daejeon 34122 (KR); LEE, Sangryeo, Daejeon 34122 (KR)
(74) Representative: Goddar, Heinz J.
(86) International application number: PCT/KR2024/004873
(87) International publication number: WO 2024/228487

(57) **Abstract**

The present disclosure relates to a lithium secondary battery improved in an output characteristic, a low-temperature characteristic, and the like. The lithium secondary battery comprises: a positive electrode, a negative electrode, and an electrolyte containing a lithium salt and a non-aqueous organic solvent, wherein the positive electrode includes a positive electrode current collector; and an active material layer that is formed on the positive electrode current collector and includes a positive electrode active material, a conductive material and an oxide-based solid electrolyte having a lithium ion source, and wherein the positive electrode active material and the oxide-based solid electrolyte are dispersed in the active material layer in the form of particles, and the average particle size(D50) of the particles satisfies a fixed ratio.

## Description

### [TECHNICAL FIELD]

### Cross Citation with Related Application(s)

This application claims the benefit of Korean Patent Application No. 10-2023-0058563 filed on May 4, 2023 and Korean Patent Application No. 10-2023-0131540 filed on October 4, 2023 in the Korean Intellectual Property Office, the disclosures of which are incorporated herein by reference in their entirety.

The present disclosure relates to a lithium secondary battery improved in an output characteristic, a low-temperature characteristic, and the like.

### [BACKGROUND]

Recently, demand for high-capacity, high-output, long-life and high-stability lithium secondary batteries has been increased as an application area of lithium secondary batteries has rapidly expanded to power storage supply of large-area devices, such as automobiles and power storage devices, as well as electricity, electronics, communication, and power supply of electronic devices such as computers.

A lithium secondary battery is generally configured to include a positive electrode, a negative electrode, a separation membrane, and an electrolyte containing an organic solvent and a lithium salt, wherein lithium ions move through the electrolyte in a charge and discharge process.

Lithium ions in the electrolyte exist in a solvated state surrounded by an organic solvent. Therefore, in order for the lithium ions in this electrolyte to move and be inserted into the electrode active material, lithium ions undergo a desolvation process in which lithium ions are separated or desorbed from the organic solvent molecules. Therefore, smooth progress of this desolvation process may affect the output, resistance, stability or the like of a lithium secondary battery.

On the other hand, in recent years, as higher capacity and higher output of the lithium secondary batteries are required, new electrolytes is being actively developed. In particular, in order to accelerate the desolvation of lithium ions and increase the output or the like of a lithium secondary battery, new electrolyte compositions or the like are being proposed, such as containing a lithium salt at a high concentration, or changing the composition of the organic solvent to form a locally high concentration area of a lithium salt around the electrode.

However, when applying the new electrolyte composition containing a high concentration of lithium salts, it may cause the problem of a decrease in fluidity due to an increase in the viscosity of the electrolyte. In particular, there is a disadvantage in that the ionic conductivity of the electrolyte decreases at low temperatures, which leads to a deterioration of the low-temperature characteristics of a lithium secondary battery, such as an increase in resistance or a decrease in battery output.

Therefore, there is a continuing need to develop a technology that can accelerate the desolvation of lithium ions in the electrolyte, thereby maintaining excellent low-temperature characteristics while improving the output characteristics of a lithium secondary battery.

### [DETAILED DESCRIPTION OF THE INVENTION]

### [Technical Problem]

It is an object of the present disclosure to provide a lithium secondary battery that accelerates the desolvation of lithium ions, thereby exhibiting improved output characteristics as well as maintaining excellent low-temperature characteristics such as high output at low temperatures.

### [Technical Solution]

Provided herein is a lithium secondary battery comprising: a positive electrode, a negative electrode, and an electrolyte containing a lithium salt and a non-aqueous organic solvent,
wherein the positive electrode includes a positive electrode current collector; and an active material layer that is formed on the positive electrode current collector and includes a positive electrode active material, a conductive material and an oxide-based solid electrolyte having a lithium ion source, and
wherein the positive electrode active material and the oxide-based solid electrolyte are dispersed in the active material layer in the form of particles, and the average particle size(D50) of the particles has a ratio of 1:4 to 1:90 between the oxide-based solid electrolyte and the positive electrode active material.

### [Advantageous Effects]

In the lithium secondary battery of the present disclosure, the positive electrode includes oxide-based solid electrolyte particles dispersed in the active material layer, wherein such oxide-based solid electrolyte particles may have an average particle size (D50) of a fixed ratio to the positive electrode active material particles. Such oxide-based solid electrolyte particles may be uniformly distributed around the positive electrode active material particles within the active material layer, and may be distributed in large numbers near an interface between the active material layer and the electrolyte.

Such oxide-based solid electrolyte particles can reduce the activation energy associated with the desolvation process of lithium ions in the electrolyte at an interface where the active material layer and the electrolyte come into contact with each other, and accelerate the desolvation of the lithium ions, thereby improving the output characteristics of a lithium secondary battery.

Furthermore, since it is possible to improve the output characteristics of a lithium secondary battery even without applying new electrolyte compositions such as containing a high concentration of lithium salts, problems such as an increase in electrolyte viscosity, a decrease in fluidity, and a decrease in electrolyte ionic conductivity and battery output at low temperatures due to application of the new electrolyte composition can be solved, and excellent low-temperature characteristics of a lithium secondary battery can be achieved.

In addition, even when an electrolyte composition containing the high concentration of lithium salts, etc. is applied together, application of the positive electrode can facilitate desolvation of lithium ions, thereby improving lithium ion conductivity and reducing resistance.

Therefore, the present disclosure can greatly contribute to the development of next-generation lithium secondary batteries that exhibit improved output characteristics and low-temperature characteristics.

### [BRIEF DESCRIPTION OF THE DRAWINGS]

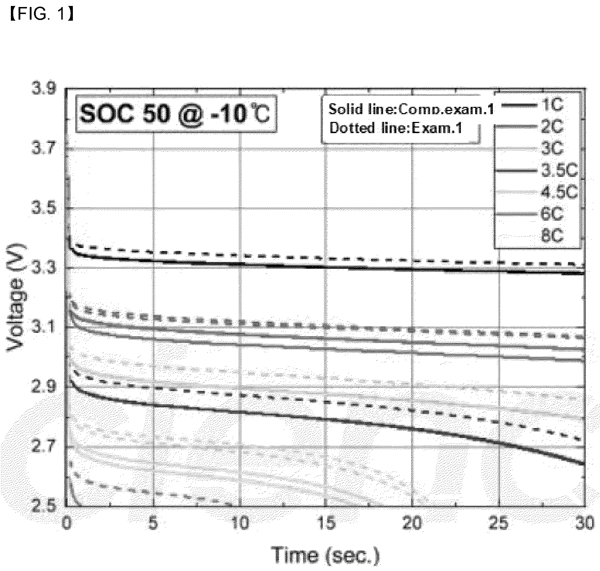

FIG. 1 is a graph showing a comparison of the degree of voltage drop for each discharge time while discharging the lithium secondary batteries of Comparative Example 1 and Example 1 from a state of charge (SOC) of 50% at -10°C for 30 seconds.

### [DETAILED DESCRIPTION OF THE EMBODIMENTS]

Terms or words used in the specification and the appended claims should not be construed as limited to ordinary or dictionary meanings, and the present disclosure should be construed with meanings and concepts that are consistent with the technical idea of the present disclosure based on the principle that the inventors may appropriately define concepts of the terms to appropriately describe their own invention in the best way.

It should be understood that the terms "comprise," "include", "have", etc. are used herein to specify the presence of stated features, integers, steps, components or combinations thereof, but do not preclude the presence or addition of one or more other features, integers, steps, components, or combinations thereof.

According to one embodiment of the present disclosure, there is provided a lithium secondary battery comprising:
a positive electrode, a negative electrode, and an electrolyte containing a lithium salt and a non-aqueous organic solvent,
wherein the positive electrode includes a positive electrode current collector; and an active material layer that is formed on the positive electrode current collector and includes a positive electrode active material, a conductive material and an oxide-based solid electrolyte having a lithium ion source, and
wherein the positive electrode active material and the oxide-based solid electrolyte are dispersed in the active material layer in the form of particles, and the average particle size(D50) of the particles has a ratio of 1:4 to 1:90 between the oxide-based solid electrolyte and the positive electrode active material.

Such a lithium secondary battery includes oxide-based solid electrolyte particles dispersed together with positive electrode active material particles in the active material layer of the positive electrode, wherein such oxide-based solid electrolyte particles can satisfy the feature that an average particle size (D50) ratio of the positive electrode active material particles is 1:4 to 1:90, or 1:5 to 1:80, or 1:10 to 1:60, or 1:15 to 1:40, or 1:16 to 1:25, or 1:20 to 1:35.

As a result of experiments conducted by the present inventors, as the oxide-based solid electrolyte particles satisfying the above-mentioned D50 ratio are included in the active material layer of the positive electrode, such oxide-based solid electrolyte particles may be uniformly distributed around the positive electrode active material particles within the active material layer, and particularly, they may be distributed in large numbers near an interface between the active material layer and the electrolyte. Therefore, the oxide-based solid electrolyte particles can reduce the activation energy associated with the desolvation process of lithium ions in the electrolyte at the interface where the active material layer and the electrolyte come into contact with each other, and accelerate the desolvation of the lithium ions. Additionally, this can improve the lithium ion moving speed and lithium ion conductivity around the positive electrode active material particles.

Therefore, the lithium secondary battery of one embodiment including such a positive electrode can accelerate the desolvation of the lithium ions and improve the lithium ion moving speed and conductivity in the active material layer even without applying an electrolyte composition such as containing a high concentration of lithium salts, thereby lowering the resistance of a lithium secondary battery and improving output characteristics. As a result, it is possible to not only solve problems such as an increase in electrolyte viscosity, a decrease in fluidity, and a decrease in the ionic conductivity of the electrolyte and the output of the battery at low temperatures due to the application of the high concentration of lithium salts, etc., but also achieve excellent low-temperature characteristics of a lithium secondary battery.

Now, a lithium secondary battery according to one embodiment will be described in more detail.

In the lithium secondary battery according to one embodiment, the positive electrode includes a positive electrode current collector. Such a positive electrode current collector is not particularly limited as long as it has conductivity without causing any chemical change in the battery. For example, stainless steel, aluminum, nickel, titanium, fired carbon, or aluminum or stainless steel whose surface is treated with carbon, nickel, titanium, silver, etc., and the like may be used.

Further, the active material layer on the positive electrode current collector may include a positive electrode active material, a conductive material, and an oxide-based solid electrolyte having a lithium ion source, and may optionally further include a binder.

At this time, the positive electrode active material may be a compound capable of reversibly intercalating and deintercalating lithium, and specifically, it may include lithium metal oxide containing lithium and at least one metal such as iron, cobalt, manganese, nickel, or aluminum.

Specifically, the lithium metal oxide may include lithium-manganese-based oxide (e.g., LiMnO₂, LiMn₂O₄, etc.), lithium-cobalt-based oxide (e.g., LiCoO₂, etc.), lithium-nickel-based oxide (e.g., LiNiO₂, etc.), lithium-nickel-manganese-based oxide (e.g., LiNi_{1-Y}Mn_{Y}O₂ (where 0<Y<1), LiMn_{2-Z}Ni_{Z}O₄ (where 0<Z<2), etc.), lithium-nickel-cobalt-based oxide (e.g., LiNi_{1-Y1}Co_{Y1}O₂ (where 0<Y1<1, etc.), lithium-manganese-cobalt-based oxide (e.g., LiCo_{1-Y2}Mn_{Y2}O₂ (where 0<Y2<1), LiMn_{2-Z1}Co_{Z1}O₄ (where 0<Z1<2), etc.), lithium-nickel-manganese-cobalt-based oxide (e.g., Li(NiₚCo_{q}Mnᵣ)O₂ (where 0<p<1, 0<q<1, 0<r<1, and p+q+r=1) or Li(Niₚ₁Co_{q1}Mnᵣ₁)O₄ (where 0<p1<2, 0<q1<2, 0<r1<2, and p1+q1+r1=2), etc.), or lithium-nickel-cobalt-transition metal(M) oxide (e.g., Li(Niₚ₂Co_{q2}Mnᵣ₂Mₛ₂)O₂ (where M is selected from the group consisting of Al, Fe, V, Cr, Ti, Ta, Mg and Mo, and p2, q2, r2, and s2 are atomic fractions of each independent elements, wherein 0<p2<1, 0<q2<1, 0<r2<1, 0<s2<1, and p2+q2+r2+s2=1), etc.), lithium iron phosphate (e.g., Li₁₊ₐFe₁₋ₓMₓ(PO_{4-b})X_{b} (where M is at least one selected from Al, Mg, and Ti, X is at least one selected from F, S and N, -0.5 ≤ a ≤ 0.5, 0 ≤ x ≤ 0.5, 0≤ b ≤ 0.1), or the like, and any one thereof or a compound of two or more thereof may be used.

Among these, the positive electrode active material includes lithium metal oxide containing lithium; and two or more metals selected from the group consisting of nickel, manganese, cobalt, and aluminum, wherein the lithium metal oxide may contain 60 mol% or more, or 60 to 99 mol%, or 70 to 95 mol% of nickel, based on the total metal content excluding lithium. Such a lithium metal oxide may be represented, for example, by the following Chemical Formula 1:

[Chemical Formula 1] LiₓNiₐCo_{b}M¹_{c}M²_{d}O₂

wherein in Chemical Formula 1, the M¹ may be one or more selected from Mn and Al, or a combination thereof, M² may be one or more selected from the group consisting of Zr, B, W, Mg, Ce, Hf, Ta, La, Ti, Sr, Ba, F, P and S, 0.90≤x≤1.1, or 0.95≤x≤1.08, or 1.0≤x≤1.08, and 0.60≤a<1.0, or 0.70≤a≤0.99, or 0.80≤a≤0.95.

As the lithium metal oxide containing such a high content of nickel is used as a positive electrode active material, and combined with an oxide-based solid electrolyte, it is possible to further improve the output and capacity characteristics of a lithium secondary battery.

The above-mentioned positive electrode active material may be included in an amount of 60 to 99% by weight, or 70 to 99% by weight, or 80 to 98% by weight, based on the total weight of the active material layer.

In addition, as the oxide-based solid electrolyte, any solid electrolyte that has a lithium ion source including lithium in its structure, and has a form of lithium metal oxide or lithium metal phosphate can be used.

Specific examples thereof include at least one lithium metal oxide or lithium metal phosphate selected from Nasicon-type solid electrolyte, Lisicon-type solid electrolyte, Garnet-type solid electrolyte, Perovskite-type solid electrolyte, and LiPON-type solid electrolyte. More specific examples thereof include at least one selected from the group consisting of LAGP(lithium aluminum germanium phosphate)-based compound, LLZO(lithium lanthanum zirconium oxide)-based compound, LATP(lithium aluminum titanium phosphate)-based compound, LLZTO(lithium lanthanum zirconium tantalum oxide)-based compound, LLTO(lithium lanthanum titanium oxide)-based compound, LSTP(lithium silicon titanium phosphate)-based compound, and LGPO(lithium germanium phosphate)-based compound.

Among these, from the viewpoint of accelerating the desolvation of lithium ions at an interface between the active material layer and the electrolyte and improving the ionic conductivity and output of a lithium secondary battery, a Nasicon-type solid electrolyte such as the LAGP-based compound or LATP-based compound can be appropriately used.

In the above-mentioned positive electrode, the positive electrode active material and the oxide-based solid electrolyte may be dispersed in the form of particles within the active material layer, and each has a predetermined average particle size(D50), thereby satisfying the above-mentioned D50 ratio. At this time, the average particle size(D50) of each particle can be calculated as the particle size corresponding to 50% of the cumulative volume in a particle size distribution curve, for example, when the particle size distribution of the positive electrode active material particles or the oxide-based solid electrolyte particles is measured using a laser diffraction method and a laser diffraction particle size measuring device.

Specifically, the positive electrode active material may have an average particle size(D50) of 5 to 15 µm, or 7 to 13 µm, or 8 to 12 µm, and the oxide-based solid electrolyte may have an average particle size(D50) of 100 nm to 1.2 µm, or 120 nm to 1 µm, or 150 to 800 nm, or 200 to 600 nm. As these components satisfy the above-mentioned D50 ratio while satisfying the above-mentioned average particle size (D50), the lithium secondary battery of one embodiment may exhibit not only superior capacity and output characteristics, but also low resistance and low temperature characteristics.

Further, the oxide-based solid electrolyte may be included in an amount of 0.1 to 5 parts by weight, or 0.5 to 4 parts by weight, or 1 to 3.5 parts by weight, based on 100 parts by weight of the positive electrode active material, from the viewpoint of accelerating the desolvation of lithium ions at the interface between the active material layer and the electrolyte and improving the lithium ion moving speed and conductivity, etc., without inhibiting the insertion and desorption process of lithium ions by the positive electrode active material.

Meanwhile, the conductive material included in the active material layer is a component for further improving the conductivity of the positive electrode active material. Such a conductive material is not particularly limited as long as it has conductivity without causing any chemical change in the battery, and, for example, a conductive material, including: carbon powder such as carbon black, acetylene black, Ketjen black, channel black, furnace black, lamp black, or thermal black; graphite powder such as natural graphite with a well-developed crystal structure, artificial graphite, or graphite; conductive nanomaterials such as carbon nanofibers or carbon nanotubes; fluorinated carbon powder; conductive powder such as aluminum powder, and nickel powder; conductive whiskers such as zinc oxide whiskers and potassium titanate whiskers; conductive metal oxide such as titanium oxide; or conductive materials such polyphenylene derivatives, may be used. Among these, the conductive material includes conductive nanomaterials such as carbon nanotubes or carbon nanofibers, which can further lower the resistance of the lithium secondary battery of one embodiment and further improve output characteristics, and the like.

Typically, the conductive material may be included in an amount of 1 to 20% by weight, or 1 to 15% by weight, or 1 to 10% by weight, based on the total weight of the positive electrode active material layer.

The binder selectively included in the active material layer is a component that assists in the bonding between the positive electrode active material and the conductive material and in the bonding to the current collector. Examples of the binder may include polyvinylidene fluoride, polyvinyl alcohol, carboxymethylcellulose(CMC), starch, hydroxypropyl cellulose, regenerated cellulose, polyvinylpyrrolidone, polytetrafluoroethylene, polyethylene(PE), polypropylene, ethylene-propylene-diene monomer, sulfonated ethylene-propylene-diene monomer, nitrile-based rubber, styrene-butadiene rubber, fluororubber or the like. Mixtures or copolymers of two or more selected from these may also be used.

Typically, the binder may be included in an amount of 1 to 20% by weight, or 1 to 15% by weight, or 1 to 10% by weight based on the total weight of the positive electrode active material layer.

In addition, a filler may be optionally added to the positive electrode as a component for inhibiting the expansion thereof. Such a filler is not particularly limited as long as it can inhibit the expansion of the electrode without causing any chemical change in the battery, and examples thereof may include olefinic polymers such as polyethylene and polypropylene; fibrous materials such as glass fibers and carbon fibers.

The above-mentioned positive electrode can be prepared, for example, by dispersing and mixing the positive electrode active material, the oxide-based solid electrolyte, the binder, the conductive material and the like in a dispersion medium (solvent) to form a slurry, and coating the slurry onto a positive electrode current collector, followed by drying and rolling. At this time, the dispersion medium may be NMP(N-methyl-2-pyrrolidone), DMF(dimethyl formamide), DMSO(dimethyl sulfoxide), ethanol, isopropanol, water, or a mixture thereof, but are not necessarily limited thereto.

Meanwhile, in the lithium secondary battery of one embodiment, the negative electrode may have a conventional configuration known in the art. For example, the negative electrode may include a negative electrode current collector, and a negative electrode active material layer formed on the negative electrode current collector, wherein the negative electrode active material layer may include, for example, a negative electrode active material and, if necessary, additives such as a conductive material, a binder, and a filler. In addition, such a negative electrode can be formed by a general method of dispersing and mixing each component of the negative electrode active material layer in a dispersion medium (solvent) to form a slurry, coating the slurry onto a negative electrode current collector, followed by drying and rolling.

At this time, the negative electrode current collector may be platinum(Pt), gold(Au), palladium(Pd), iridium(Ir), silver(Ag), ruthenium(Ru), nickel(Ni), stainless steel (STS), copper(Cu), molybdenum(Mo), chromium(Cr), carbon(C), titanium(Ti), tungsten(W), ITO(In doped SnO₂), FTO(F doped SnO₂), or an alloy thereof, or copper(Co) or stainless steel whose surface is treated with carbon(C), nickel(Ni), titanium(Ti) or silver(Ag), or the like, but is not necessarily limited thereto. The shape of the negative electrode current collector may be in the form of a foil, a film, a sheet, a punched form, a porous body, a foam or the like.

Further, as the negative electrode active material, a compound capable of reversible intercalation and deintercalation of lithium may be used. A specific example thereof may be a carbonaceous material such as artificial graphite, natural graphite, graphitized carbon fiber or amorphous carbon; a metallic substance capable of alloying with lithium, such as Si, Al, Sn, Pb, Sb, Zn, Bi, In, Mg, Ga, Cd, a Si alloy, a Sn alloy or an Al alloy; a metal oxide capable of doping and dedoping lithium such as SiOβ(0 < β < 2), SnO₂, vanadium oxide, or lithium vanadium oxide; or a composite including the metallic substance and the carbonaceous material such as a Si-C composite or a Sn-C composite, and any one or a mixture of two or more thereof may be used. Further, as the negative electrode active material, a metal lithium thin film may be used.

In addition, as a carbonaceous material, both low-crystalline carbon and high-crystalline carbon may be used. Representative examples of the low-crystalline carbon include soft carbon and hard carbon, and representative examples of the high-crystalline carbon include amorphous, sheet-type, flake-type, spherical or fiber-type natural or artificial graphite, Kish graphite, pyrolytic carbon, mesophase pitch-based carbon fiber, meso-carbon microbeads, mesophase pitches, and high-temperature calcined carbon such as petroleum or coal tar pitch derived cokes.

The above-mentioned negative electrode active material may be included in an amount of 60 to 99% by weight, or 70 to 99% by weight, or 80 to 98% by weight, based on the total weight of the negative electrode active material layer.

In the other embodiments, the negative electrode may not include a negative electrode active material layer, but may include only a negative electrode current collector. In such a negative electrode, lithium ions moved from the positive electrode in a charge and discharge process are electrodeposited on the negative electrode current collector to form a lithium metal layer, and this lithium metal layer can function as a negative electrode active material.

On the other hand, the binder and conductive material included in the negative electrode active material layer can be the same as those previously described for the positive electrode, and therefore, further description thereof will be omitted. Furthermore, similarly to the positive electrode already mentioned above, the negative electrode active material layer may further include an oxide-based solid electrolyte having the lithium ion source described above. In this case, the oxide-based solid electrolyte may satisfy the above-mentioned D50 ratio to the negative electrode active material particles.

The above-mentioned lithium secondary battery further includes an electrolyte containing lithium salt and a non-aqueous organic solvent. Such an electrolyte functions as a transfer medium for lithium ions between the positive electrode and the negative electrode, wherein such lithium ions exist in the electrolyte in a solvated state, while they can be inserted into the electrode active material through desolvation at the interface between the electrolyte and the electrode. The secondary battery of one embodiment can accelerate this desolvation and exhibit more improved output characteristics as described above.

The lithium salt contained in the electrolyte is used as a medium for transferring ions within a lithium secondary battery. For example, the lithium salt may include Li⁺ as a cation, and may together include an anion selected from the group consisting of F⁻, Cl⁻, Br⁻, I⁻, NO₃⁻, N(CN)₂⁻, BF₄⁻, ClO₄⁻, B₁₀Cl₁₀⁻, AlCl₄⁻, AlO₂⁻, PF₆⁻, CF₃SO₃⁻, CH₃CO₂⁻, CF₃CO₂⁻, AsF₆⁻, SbF₆⁻, CH₃SO₃⁻, (CF₃CF₂SO₂)₂N⁻, (CF₃SO₂)₂N⁻, (FSO₂)₂N⁻, BF₂C₂O₄⁻, BC₄O₈⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, C₄F₉SO₃⁻, CF₃CF₂SO₃⁻, CF₃CF₂(CF₃)₂CO⁻, (CF₃SO₂)₂CH⁻, CF₃(CF₂)₇SO₃⁻ and SCN⁻.

Specifically, the lithium salt may include at least one selected from the group consisting of LiCl, LiBr, Lil, LiBF₄, LiClO₄, LiB₁₀Cl₁₀, LiAlCl₄, LiAlO₂, LiPF₆, LiCF₃SO₃, LiCH₃CO₂, LiCF₃CO₂, LiAsF₆, LiSbF₆, LiCH₃SO₃, LiFSI (Lithium bis(fluorosulfonyl)imide, LiN(SO₂F)₂), LiBETI (lithium bis(perfluoroethanesulfonyl)imide, LiN(SO₂CF₂CF₃)₂ and LiTFSI (lithium bis(trifluoromethanesulfonyl)imide, LiN(SO₂CF₃)₂).

The concentration of the lithium salt can be appropriately changed within the normally usable range, and may be included in the electrolyte at a concentration of 0.5M to 6M, or at a concentration of 1M to 5M.

In a more specific example, the electrolyte may include the lithium salt at a relatively low concentration of 0.5M or more and not more than 2M, or 0.7M to 1.5M. Even in such a case, as desolvation of lithium ions is accelerated by the action of the above-mentioned positive electrode, the lithium secondary battery of one embodiment may exhibit improved output characteristics. As a result, it is possible to not only solve problems such as an increase in electrolyte viscosity, a decrease in fluidity, and a decrease in electrolyte ionic conductivity and battery output at low temperatures due to the application of an electrolyte composition containing the lithium salt at a high concentration, but also achieve excellent low-temperature characteristics of a lithium secondary battery.

On the other hand, in the other embodiments of the disclosure, the electrolyte may include a lithium salt at a high concentration of 2M to 6M, or 2.5M to 5.5M. In such a case, by including a high concentration of lithium salts and applying the above-mentioned positive electrode, desolvation of lithium ions can be further accelerated, and the output characteristics of a secondary battery can be further improved.

Further, by applying the positive electrode, the lithium ion conductivity can be improved and the resistance can be reduced even at low temperatures. Thereby, it is possible to reduce deterioration in low-temperature output characteristics due to high concentration of lithium salts, and the like.

On the other hand, the kind of a non-aqueous organic solvent that can be included in the electrolyte is not particularly limited, and any organic solvent that has been known to be applicable to the electrolyte of a lithium ion battery can be used. Examples of such organic solvents include at least one selected from the group consisting of a carbonate-based solvent, an ether-based solvent, a nitrile-based solvent, a phosphate-based solvent, and a sulfone-based solvent.

More specifically, the carbonate-based solvent may include dimethyl carbonate, diethyl carbonate, dipropyl carbonate, ethylene carbonate, propylene carbonate, butylene carbonate, fluoroethylene carbonate, methyl propyl carbonate, ethyl methyl carbonate, ethyl propyl carbonate, methyl(2,2,2-trifluoroethyl)carbonate, or the like, and the phosphate-based solvent may include trimethyl phosphate, triethyl phosphate, 2-(2,2,2-trifluoroethoxy)-1,3,2-dioxaphosphorane 2-oxide, or the like.

Further, the ether-based solvent may include dibutyl ether, tetraglyme, diglyme, dimethoxyethane, or a tetrahydrofuran derivative such as 2-methyltetrahydrofuran, and the nitrile-based solvent may include succinonitrile, adiponitrile, sebaconitrile, acetonitrile, propionitrile, or the like. Further, the sulfone-based solvent may include dimethyl sulfone, ethylmethyl sulfone, sulforane, or the like.

Meanwhile, the electrolyte may, in addition to the lithium salt and the non-aqueous organic solvent, further include a diluent that exhibits a solubility of the lithium salt that is at least 10 times lower than that of the non-aqueous organic solvent. Such a diluent is an organic solvent that is miscible with the non-aqueous organic solvent without substantially showing solubility in the lithium salt. For example, it may be an ether-based solvent having a fluorine-substituted alkyl group, and more specifically, it may include one or more selected from the group consisting of 1,1,2,2-tetrafluoroethyl-2,2,3,3-tetrafluoropropyl ether(TTE), bis(2,2,2-trifluoroethyl)ether (BTFE), 1,1,2,2-tetrafluoroethyl-2,2,2-trifluoroethyl ether(TFTFE), methoxynona fluorobutane(MOFB) and ethoxynona fluorobutane(EOFB).

When such a diluent is further included, a locally high concentration of lithium salt may exist in the non-aqueous organic solvent in the electrolyte, and a lithium salt may not substantially exist in the diluent. As a locally high concentration of lithium salt exists in a solvated form in the electrolyte in this way, the output characteristics of the lithium secondary battery can be further improved, and also the increase in viscosity and the decrease in fluidity of the electrolyte can be reduced. In addition, if the above-mentioned positive electrode is applied together with this locally high concentration of salt electrolyte, the lithium ion conductivity can be improved and the resistance can be reduced even at low temperatures, thereby reducing the deterioration of low-temperature output characteristics caused by high-concentration lithium salt, etc.

The amount of the diluent used can be adjusted depending on the type of non-aqueous organic solvent and lithium salt, or the overall concentration of the lithium salt. For example, the diluent : the non-aqueous organic solvent may be included in the electrolyte at a molar ratio of 1:0.2 to 1:5, or 1:0.5 to 1:2.

Meanwhile, the lithium secondary battery of the above-mentioned embodiments may further include a porous separation membrane interposed between the positive electrode and the negative electrode.

Such a porous separation membrane can be made of olefinic polymers such as polyethylene and polypropylene, glass fiber, etc. in the form of a sheet, a multilayer membrane, a microporous film, a woven fabric, and a nonwoven fabric, or the like, but is not necessarily limited thereto. However, it may be preferable to apply porous polyethylene or porous glass fiber non-woven fabric (glass filter) as a separation membrane, and it may be more preferable to apply a porous glass filter (glass fiber non-woven fabric) as a separation membrane. The separation membrane may be an insulating thin film with high ion permeability and mechanical strength, and the pore diameter of the separation membrane may generally range from 0.01 to 10 µm, and the thickness may generally range from 5 to 300 µm, but are not limited thereto.

In addition, in the other embodiments of the lithium secondary battery, the separation membrane may not be interposed, but the above-mentioned electrolyte may be interposed between the positive electrode and the negative electrode in the form of an electrolyte membrane or an electrolyte film. At this time, the electrolyte membrane or the electrolyte film may be a form containing the above-mentioned lithium salt and non-aqueous organic solvent in a polymer matrix, As the polymer matrix, a well-known polymer-based solid electrolyte or a crosslinked polymer obtained by crosslinking polymerization of a polyfunctional acrylate-based monomer may be used. In this case, the lithium secondary battery of the one embodiment may be a semi-solid-state battery that uses a liquid electrolyte and a solid-state electrolyte in combination.

Meanwhile, the lithium secondary battery of one embodiment may be prepared according to a conventional method in the art. For example, the lithium secondary battery can be prepared by housing an electrode assembly including a positive electrode, a negative electrode, and a separation membrane (or electrolyte membrane) in a case, and injecting and impregnating the above-mentioned electrolyte in the case.

Such a lithium secondary battery can be applied not only to a battery cell used as power sources for small-sized devices, but can also be particularly suitably used as a unit battery in a battery module, which is a power source for medium-sized and large-sized devices.

Hereinafter, the present disclosure will be described in more detail with reference to specific examples. However, the following examples are only exemplary embodiments for facilitating understanding of the invention, and are not intended to limit the scope of the invention.

### Example 1: Preparation of lithium secondary battery

Lithium nickel cobalt manganese composite oxide (NCM 811; D50: 10 µm) containing 80 mol% of nickel among all transition metals were used as the positive electrode active material, and carbon nanotubes as the conductive material, polyvinylidene fluoride(PVdF) as the binder, and LiAl_{0.3}Ti_{1.7}(PO₄)₃ (LATP-based) compound particles with D50: 300 nm as the oxide-based solid electrolyte were used respectively (D50 ratio of oxide-based solid electrolyte: the electrode active material: 1:33.3).

The positive electrode active material: conductive material: binder: oxide-based solid electrolyte were mixed at a weight ratio of 94:1.5:2:2.5, and the mixture was dispersed in NMP solvent at 2500 to 3000 rpm to prepare a slurry. This was then coated with a uniform thickness on 25 µm thick aluminum foil using a blade-type coating machine which is a Mathis coater (Labdryer/coater type LTE, Werner Mathis AG), dried in a vacuum oven at 110 to 130°C for 12 to 24 hours, and rolled using a roll press machine to prepare a positive electrode for lithium secondary battery.

Graphite was used as a negative electrode active material, and the negative electrode active material: conductive material: binder were mixed at a weight ratio of 96.5:1.5:2 without using an oxide-based solid electrolyte, and the same process as for the above positive electrode was performed to produce a negative electrode.

The positive electrode and the negative electrode were respectively punched out, and then a separation membrane made of porous polyethylene (PE) film was interposed and laminated between them to prepare an electrode assembly.

The prepared electrode assembly was placed in a pouch, and then an electrolyte solution was injected into a battery case to produce a lithium secondary battery. At this time, an electrolyte solution was prepared by dissolving LiFSI at a concentration of 1.0M in an organic solvent consisting of ethylene carbonate/ethylmethyl carbonate (mixing volume ratio of EC/EMC was 3/7).

### Example 2: Preparation of lithium secondary battery

A positive electrode and a lithium secondary battery were produced in the same manner as in Example 1 (D50 ratio of oxide-based solid electrolyte: the electrode active material: 1:16.7), except that in Example 1, LiAl_{0.3}Ti_{1.7}(PO₄)₃ (LATP-based) compound particles with D50: 600 nm were used as the oxide-based solid electrolyte.

### Example 3: Preparation of lithium secondary battery

A positive electrode and a negative electrode were each produced in the same manner as in Example 1.

On the other hand, based on 100 parts by weight of the electrolyte solution prepared by dissolving LiFSI at a concentration of 1.0M in an organic solvent consisting of ethylene carbonate/ethylmethyl carbonate (mixing volume ratio of EC/EMC was 3/7), 4 parts by weight of ethoxylated trimethylolpropaint triacrylate (ETPTA) and 0.6 parts by weight of thermal initiator AIBN were added respectively. Next, the mixture was heat-treated at 60°C for 3 hours under an oxygen-blocking atmosphere to advance a crosslinking reaction. Thereby, a gel electrolyte containing the electrolyte solution on the crosslinked polymer of ETPTA was prepared.

After the positive electrode and the negative electrode were punched out, respectively, they were stacked with the gel electrolyte interposed between them to prepare an electrode assembly. The prepared electrode assembly was placed inside a battery case to produce a lithium secondary battery.

### Comparative Example 1: Production of positive electrode and lithium secondary battery

A positive electrode and a lithium secondary battery containing the same were produced in the same manner as in Example 1, except that oxide-based solid electrolyte particles were not used during the production of the positive electrode.

### Comparative Example 2: Production of positive electrode and lithium secondary battery

A positive electrode and a lithium secondary battery containing the same were produced in the same manner as in Example 3, except that oxide-based solid electrolyte particles were not used during the production of the positive electrode.

### Experimental Example 1 - Evaluation of battery resistance for each state of charge (SOC) for small-sized cells

First, the lithium secondary batteries of Examples 1 and 2 and Comparative Example 1 were produced as small-sized cells having a capacity of 60 mAh. For the lithium secondary batteries of Examples 1 and 2, and Comparative Example 1 in the form of small-sized cells, the resistance for each state of charge (SOC) was measured while repeatedly performing the charge/discharge test at room temperature (about 25°C) under the conditions: 1) 0.2C~0.33C charge (cut-off: 4.2V, 0.05C) and 2) 0.2C~ 0.33C discharge (cut-off: 2.5V).

Specifically, the above charge/discharge test was repeatedly performed under SOC settings of 10% to 90%. After each charge/discharge, the direct current resistance (2.5C discharge (cut-off: 10s or 2V)) was measured, respectively.

As the resistance measurement results for each state of charge, the resistance evaluation results at SOC 10%, 50% and 90% are shown together in Table 1 below:

**[Table 1]**

| SOC(%) | Comparative Example 1 (Ω) | Example 2 (Ω) | Example 1 (Ω) |
|---|---|---|---|
| 90 | 0.75 | 0.726 | 0.718 |
| 50 | 0.696 | 0.689 | 0.672 |
| 10 | 1.262 | 1.225 | 1.198 |

Referring to Table 1, it was confirmed that the lithium secondary batteries of Examples 1 and 2 exhibit lower resistance and higher ionic conductivity for each state of charge as compared to Comparative Example 1.

### Experimental Example 2 - Evaluation of battery resistance for each state of charge (SOC) for large-sized cells

The lithium secondary batteries of Examples 1 and 3 and Comparative Examples 1 and 2 were produced as large-sized cells having a capacity of 40 Ah in order to confirm the characteristics by each form of the electrolyte. For the lithium secondary batteries of Examples 1 and 3 and Comparative Examples 1 and 2 in the form of large-sized cells, the resistance for each state of charge (SOC) was measured while repeatedly performing the charge/discharge test at room temperature (about 25°C) under the conditions: 1) 0.2C - 0.33C charge (cut-off: 4.2V, 0.05C) and 2) 0.2C - 0.33C discharge (cut-off: 2.5V).

Specifically, the above charge/discharge test was repeated under SOC settings of 10% to 90%. After each charge/discharge, the direct current resistance measurement (2.5C discharge (cut-off: 10s or 2V)) was performed.

As the resistance measurement results for each state of charge, the resistance evaluation results at SOC 10%, 50% and 90% are shown together in Table 2 below:

**[Table 2]**

| SOC(%) | Comparative Example 1 (Ω) | Comparative Example 2 (Ω) | Example 1 (Ω) | Example 3 (Ω) |
|---|---|---|---|---|
| 90 | 1.981 | 2.252 | 1.871 | 2.098 |
| 50 | 1.879 | 2.187 | 1.801 | 1.98 |
| 10 | 3.468 | 3.641 | 3.172 | 3.609 |

Referring to Table 2, the batteries of Comparative Example 2 and Example 3 to which a gel electrolyte was applied appear to have generally increased resistance due to the difference in electrolyte form, as compared to the batteries of Comparative Example 1 and Example 1 to which an electrolytic solution and a separation membrane were applied. This appears to be due to the relatively low ionic conductivity of the gel electrolyte.

However, it was confirmed that regardless of the form of the electrolyte, the lithium secondary batteries of Examples 1 and 3 in which an oxide-based solid electrolyte was added to the positive electrode as in Examples exhibit lower resistance and higher ionic conductivity for each state of charge compared to Comparative Examples 1 and 2, respectively.

### Experimental Example 2 - Evaluation of low temperature characteristics

For the lithium secondary batteries of Example 1 and Comparative Example 1, a discharge test was performed for 30 seconds starting at SOC 50% at a temperature of -10°C.

Specifically, first, charge was performed up to SOC 50% under conditions of 0.1C-0.33C at a temperature of 25°C. After that, the lithium secondary battery with SOC 50% was stored in a chamber at -10°C for 3 to 5 hours, and the temperature of the lithium secondary battery was cooled to -10°C. Subsequently, while the discharge was progressing to a cut-off of 30 s or 2.5 V under the condition of 1C, the degree of voltage drop for each discharge time was measured.

Subsequently, after the charge progressed again by the discharge amount under the conditions of -10°C and 0.1C, the discharge test was repeatedly performed while changing the discharge rate from 1C to 2C, 3C, 3.5C, 4.5C, 6C and 8C. Through the above process, while the discharge was progressed for 30 seconds at each discharge rate, the degree of voltage drop for each discharge time was measured, and shown in FIG. 1. The low-temperature output characteristics calculated therefrom are shown in Table 3 below:

**[Table 3]**

| Discharge rate | Comparative Example 1 output (@-10°C; Wh) | Example 1(@-10°C; Wh) |
|---|---|---|
| 1C | 1.067 | 1.088 |
| 2C | 1.968 | 2.020 |
| 3C | 2.755 | 2.852 |
| 3.5C | 3.093 | 3.172 |
| 4.5C | 2.262 | 2.718 |
| 6C | 0.146 | 1.223 |
| 8C | 0.021 | 0.022 |

Referring to FIG. 1 and Table 3, it was confirmed that the lithium secondary battery of Example 1 is low in the degree of voltage drop in the early stage of discharge and exhibits excellent output characteristics as compared to Comparative Example 1 at a low temperature of -10°C.

## Claims

1. A lithium secondary battery comprising:
a positive electrode, a negative electrode, and an electrolyte containing a lithium salt and a non-aqueous organic solvent,
wherein the positive electrode includes a positive electrode current collector; and an active material layer that is formed on the positive electrode current collector and includes a positive electrode active material, a conductive material and an oxide-based solid electrolyte having a lithium ion source, and
wherein the positive electrode active material and the oxide-based solid electrolyte are dispersed in the active material layer in the form of particles, and the average particle size D50 of the particles has a ratio of 1:4 to 1:90 between the oxide-based solid electrolyte and the positive electrode active material.

2. The lithium secondary battery of claim 1, wherein the positive electrode active material is a lithium metal oxide containing lithium and two or more metals selected from the group consisting of nickel, manganese, cobalt and aluminum,
wherein the lithium metal oxide contains 60 mol% or more of nickel based on the total metal content excluding lithium.

3. The lithium secondary battery of claim 1, wherein the oxide-based solid electrolyte includes at least one lithium metal oxide or lithium metal phosphate selected from Nasicon-type solid electrolyte, Lisicon-type solid electrolyte, Garnet-type solid electrolyte, Perovskite-type solid electrolyte, and LiPON-type solid electrolyte.

4. The lithium secondary battery of claim 1, wherein the oxide-based solid electrolyte includes at least one selected from the group consisting of LAGP(lithium aluminum germanium phosphate)-based compound, LLZO(lithium lanthanum zirconium oxide)-based compound, LATP(lithium aluminum titanium phosphate)-based compound, LLZTO(lithium lanthanum zirconium tantalum oxide)-based compound, LLTO(lithium lanthanum titanium oxide)-based compound, LSTP(lithium silicon titanium phosphate)-based compound, and LGPO(lithium germanium phosphate)-based compound.

5. The lithium secondary battery of claim 1, wherein:
the positive electrode active material has an average particle size D50 of 5 to 15 µm, and
the oxide-based solid electrolyte has an average particle size D50 of 100 nm to 1.2 µm.

6. The lithium secondary battery of claim 1, wherein the oxide-based solid electrolyte is included in an amount of 0.1 to 5 parts by weight based on 100 parts by weight of the positive electrode active material.

7. The lithium secondary battery of claim 1, wherein the conductive material includes carbon nanotubes or carbon nanofibers, and the active material layer further includes a binder.

8. The lithium secondary battery of claim 1, wherein the lithium salt includes at least one selected from the group consisting of LiCl, LiBr, Lil, LiBF₄, LiClO₄, LiB₁₀Cl₁₀, LiAlCl₄, LiAlO₂, LiPF₆, LiCF₃SO₃, LiCH₃CO₂, LiCF₃CO₂, LiAsF₆, LiSbF₆, LiCH₃SO₃, LiFSI (Lithium bis(fluorosulfonyl) imide, LiN(SO₂F)₂), LiBETI (lithium bis(perfluoroethanesulfonyl) imide, LiN(SO₂CF₂CF₃)₂) and LiTFSI (lithium bis(trifluoromethanesulfonyl) imide, LiN(SO₂CF₃)₂).

9. The lithium secondary battery of claim 1, wherein the lithium salt is included in the electrolyte at a concentration of 0.5M to 6M.

10. The lithium secondary battery of claim 1, wherein the electrolyte further includes a diluent that exhibits a solubility of the lithium salt that is at least 10 times lower than that of the non-aqueous organic solvent.

11. The lithium secondary battery of claim 10, wherein the diluent includes at least one selected from the group consisting of 1,1,2,2-tetrafluoroethyl-2,2,3,3-tetrafluoropropyl ether(TTE), bis(2,2,2-trifluoroethyl) ether(BTFE), 1,1,2,2-tetrafluoroethyl-2,2,2-trifluoroethyl ether(TFTFE), methoxynona fluorobutane(MOFB) and ethoxynonafluorobutane(EOFB).

12. The lithium secondary battery of claim 1, wherein the lithium secondary battery further comprises a separation membrane interposed between the positive electrode and the negative electrode, or
wherein the electrolyte has a form of an electrolyte membrane or an electrolyte film containing the lithium salt and a non-aqueous organic solvent in a polymer matrix, which is interposed between the positive electrode and the negative electrode.
